Europäisches Patentamt

European Patent Office

Office européen des brevets

(11) Publication number: **0 439 988 A2**

# EUROPEAN PATENT APPLICATION

(21) Application number: **90480223.8**

(51) Int. Cl.5: **G06F 15/16, G06F 9/44**

(22) Date of filing: **28.12.90**

(30) Priority: **02.02.90 US 474433**

(43) Date of publication of application:
**07.08.91 Bulletin 91/32**

(84) Designated Contracting States:
**DE FR GB**

(71) Applicant: **International Business Machines
Corporation
Old Orchard Road
Armonk, N.Y. 10504(US)**

(72) Inventor: **Crump, Dwayne Thomas
Woodbine Road
Lexington, Kentucky 40503(US)**
Inventor: **Welman, Glenn Eugene
3301 Pastern Court
Lexington, Kentucky 40513(US)**

(74) Representative: **Bonin, Jean-Jacques
Compagnie IBM France Département de
Propriété Intellectuelle
F-06610 La Gaude(FR)**

(54) **Computer monitoring of installed options.**

(57) The installation of installed options (17, 19, 21, 23) is monitored automatically by a computer at start-up. The presence of each option is recorded in battery backed-up memory (9). At each start-up the current options are compared with those in memory, and those options which were added but are not currently found to be installed are shown in an optional message on display 1 with emphasis. The computer is not reconfigured by the operator for new options.

FIG. 1

EP 0 439 988 A2

## COMPUTER MONITORING OF INSTALLED OPTIONS

### Technical Field

This invention relates to computers which monitor their physical status and signal that status to persons operating the computer. More specifically, installed optional features are monitored and their subsequent status is signaled.

### Background of the Invention

Computer monitoring of installed features at turn-on of the computer is standard. Typically, such computers automatically send signals unique to each possible installed feature and monitor for a unique response. Receipt of the response is interpreted as the feature being installed and operative. Typically, also, the computer operator may call up or is automatically presented with a list of such features found installed and operative.

In some, well known systems certain hardware devices, including options, are tested during the power-on self test (widely abbreviated as POST). POST is run when power is first applied to the machine and when initialization is called for by a predetermined keyboard entry (often the simultaneous keying of the keys labeled: Alt, Del, Ctrl) (standing for Alternate, Delete and Control). If the device is partially working, then an error is reported. If the device is totally non-functional, then for some devices no error is reported because the device is an option and simply may not be attached.

In computers having various such options which may not be installed, known systems are deficient since they merely list the current status. Even though the list is correct, an operator may not recall that an option shown as not installed has been added or an operator may not respond mentally to an item not emphasized in a list.

In prior systems installation of a new feature will be signaled as an error until the internal software of the system is reconfigured. This involves the operator installing a separate diskette, called a start-up diskette, which revises the internal control software code of the system to recognize the added device as correctly found. Moreover, this reconfiguration is lost and must be reinstalled when the computer loses power, thereby no longer storing the reconfiguration code.

In accordance with this invention, the computer is not reconfigured by the operator for options and the amount of memory used to define the status of options is small and may be protected by using permanent memory, specifically, battery back-up CMOS random access memory. (CMOS means complementary metal oxide semiconductor, now a standard, low-power-consumption circuit technology.) IBM Technical Disclosure Bulletin article "Resolution of Missing Hardware Options," Vol. 31, No. 12, May 1989, pp. 361-363 teaches using non-volatile memory in an options tracking system in which the fact of previous operable addition of an option is stored and compared with the current status of that option, but involving extensive operator participation. European Patent Application 0281999, published Sept. 14, 1988, entitled "Data Processing System With Pluggable Option Card," Inventors C. A. Heath et al, applicant International Business Machines Corp. teaches using non-volatile memory to store an identity value and card parameter data for option cards inserted in a computer. The memory is of the CMOS type, which is the same as that used in the preferred embodiment of this invention.

### Disclosure of the Invention

This invention also comprises a computer with a display of installed options, the installation of an option being monitored by the computer at each start-up of the computer by exercising the option. The presence of each option is recorded in memory. At each start-up the current options are compared with those in memory and those options which are shown as added by the memory but are not currently found to be installed are displayed with emphasis to indicate that. This brings the possibility of a non-functioning option to the attention of the computer operator.

Since the computer control code is not reconfigured by the operator for new options, the operator is saved the burden of finding and running a reconfiguration diskette or otherwise entering reconfiguration software. Since only a single bit of storage for each possible added device is needed to store its previous status, this may be permanent storage, specifically battery backed-up memory, without adding unacceptable cost to the computer.

### Brief Description of the Drawing

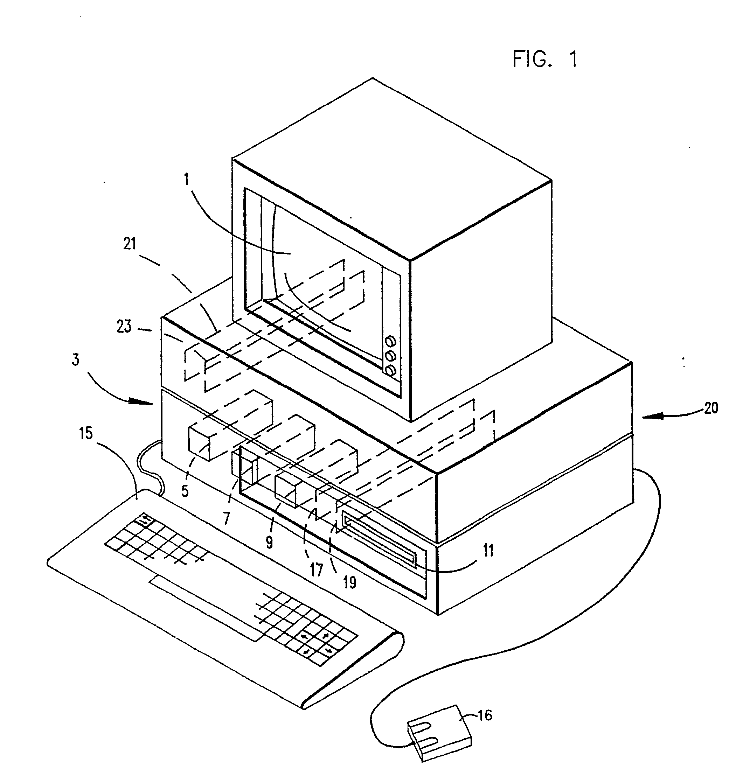

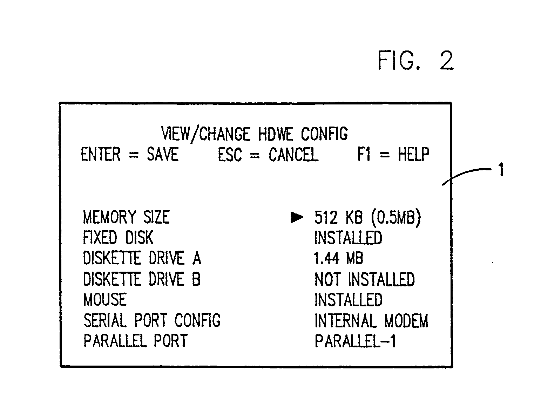

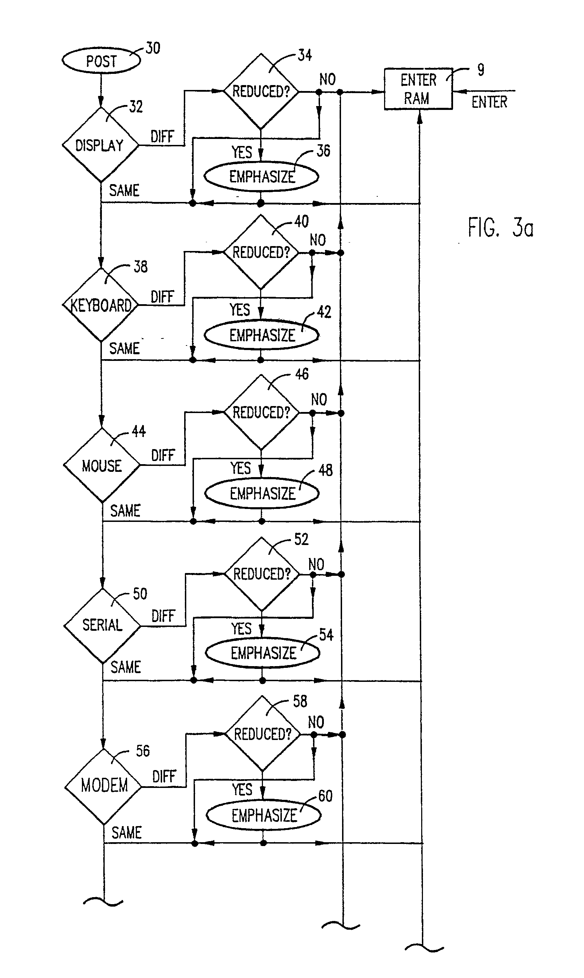

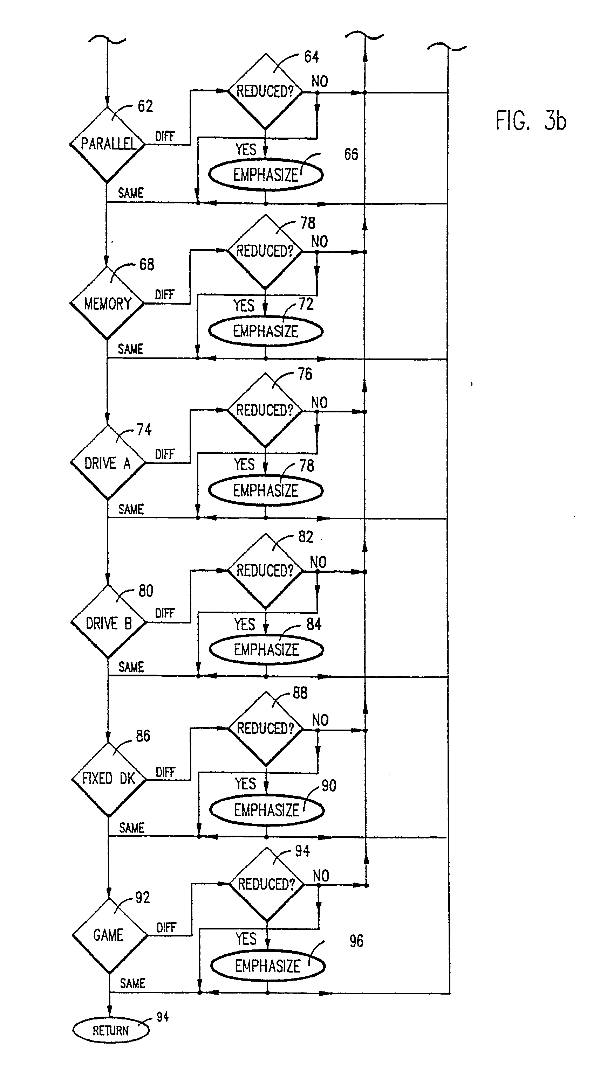

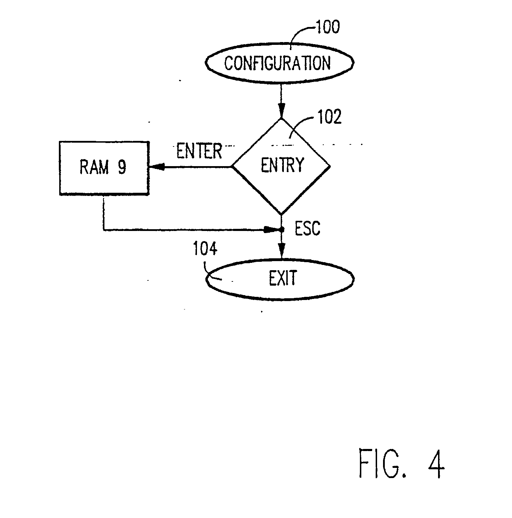

Fig. 1 is illustrative of a computer in accordance with this invention with options which may be installed; Fig. 2 illustrates a display emphasizing an option which the monitoring shows has changed from the previous installation; Fig. 3a and Fig. 3b illustrate the sequence of operations to determine the status of features, and Fig. 4 illustrates the sequence of operations to revise or not revise the memory listing of features installed.

Best Mode for Carrying Out the Invention

The preferred system is a personal computer having a display 1, which can be a basically conventional cathode ray tube (CRT) display. The personal computer has a system unit 3 which contains a microprocessor 5, read only memory 7, and random access memory 9, which is at least partially powered by both system electrical power from a wall plug and a battery which functions to maintain information in the absence of the system power. Read only memory 7 contains all of the permanent control information, including a POST which is largely conventional and widely employed, but contains oparations as here described to signal the status of options.

A disk drive 11 may receive a single external diskette or may be internal and operate off a built-in disk memory, commonly termed a fixed or "hard" disk. The disk drive 11 of the preferred embodiment specifically may constitute two diskette drives for external diskettes or a single diskette drive and a fixed disk drive, either of which configurations are commonly found.

Command signals and information signals are entered into system unit 3 by a human operator through keyboard 15 or mouse 16. Except for the changes in POST to monitor options, as will be described in detail below, the foregoing combination of a system unit 3 with microprocessor 5, ROM 7, RAM 9, disk drive 11, and entry devices 15 and 16 is conventional in personal computers and therefore will not be described in further detail.

Also shown in Fig. 1 are devices 17 and 19 in system unit 3. These are optional features (options) which may or may not be added to the computer. Typically they are mounted on circuit boards and are installed by being plugged in electrically. Expansion unit 20 is added when options are to be installed which do not fit in system unit 3. Expansion unit 20 rests upon and is electrically connected to system unit 3, and options 21 and 23 may be installed in expansion unit 20. Options 21 and 23 then function in response to signals from system unit 3 in the same manner as options 17 and 19.

At power on and at initiation by simultaneous Alt, Ctrl, and Del keyboard entry, the POST is initiated and addresses each possible option. All options are installed to be addressed electrically by system unit 3 on a single set of parallel signal lines, commonly known as the address bus. Similarly, all options are installed to provide signals to system unit 3 on another single set of parallel signal lines, commonly known as the data bus. In this preferred embodiment the status of each possible option is determined by POST placing unique signals on the address bus, with the proper response signals on the data bus constituting information that an option is in the computer and is operable. With the exception of those for the game option, the commands sent and responses monitored for are virtually identical or essentially the same as in previous systems. (The game option has sound capabilities and directional "joy stick" input capabilities suitable for playing computer games.) Details of the POST signals and responses for this monitoring are as follows:

**Display** - Write and read display adapter registers; Write and read Display adapter memory.

**Keyboard** - Command reset; Receive reset complete.

**Mouse** - Command reset; Receive reset complete.

**Serial Port** - Write and read at known addresses.

**Internal Modem** - Send setup command; Receive setup-complete response.

**Parallel Port** - Write and read at known addresses.

**Memory** - Determine memory size by writing and reading memory locations at 64 K byte boundaries; first incorrect response indicating memory size; Write and read bit patterns in all memory locations within the determined memory size to verify correct function.

**Diskette Drive A** - Command move head to track zero; Receive head at track zero; Command move head away from track zero; Receive head not at track zero.

**Diskette Drive B** - Command move head to track zero; Receive head at track zero; Command move head away from track zero; Receive head not at track zero; Check continuity on two lines (lines installed only when this feature is installed).

**Fixed disk** - Write command; Check fixed disk control line low; Command reset; Receive reset complete.

**Game** - Write predetermined pattern of data to first-in-first-out (FIFO) buffer register until full; Receive information written by writing further zeros to FIFO until empty.

In this manner the system automatically addresses all of the possible options simultaneously with signals unique to only one of the options. A response is awaited for within a predetermined time (commonly termed time-out). Failure to receive the response before time-out is interpreted as the option not being installed, proper installation therefore requiring not only physical presence of the option, but its proper functioning.

This results in defining all options which are found installed, the information is stored as a single one or zero in one bit location for each option in memory 9. This stored information is compared with a previous list of options found installed. The loss of an option is noted, and this information is the basis of an emphasized item in the message on display 1. Fig. 2 is a display 1 message showing the options in the preferred embodiment as found by the POST monitoring. The black arrowhead pointing to the memory size provides the emphasis mark. It appears because the immediately preceding status of installation found by the POST monitoring had more memory than the 512 KB shown in this screen.

Preferably, however, screen of Fig. 2 is not shown unless it is called for by an entry from keyboard 15 or mouse 16 calling for it. However, where a reduced option is found which would be emphasized on the screen, the POST will produce a message on the screen that a configuration error appears or, alternatively, could automatically bring up the screen of Fig. 2.

Fig. 3a and Fig. 3b are illustrative of the sequence of operations to effectuate the foregoing. As POST 30 progresses it begins the feature monitoring by interrogating for display 1 at action 32 as described and comparing that status with the status for display 1 stored in RAM 9. If the installed status is the same, the sequence moves to monitor the next feature. If the installed status is different, this is determined to be a reduction or addition in action 34 with respect to the prior installed status for display 1 stored in RAM 9. A reduced status results in an emphasize signal 36 (commonly termed a flag) being stored in RAM 9. An addition determination results in that new status being stored in RAM 9 in place of the information for the previous status for display 1.

Keyboard 15 is then monitored by interrogating for keyboard 15 at action 38 as described and comparing that status with the status for keyboard 15 stored in RAM 9. If the installed status is the same, the sequence moves to monitor the next feature. If the installed status is different, this is determined to be a reduction or addition in action 40 with respect to the prior installed status for keyboard 15 stored in RAM 9. A reduced status results in an emphasize signal 42 being stored in RAM 9. An addition determination results in that new status being stored in RAM 9 in place of the information for the previous status for keyboard 15.

Mouse 16 is then monitored by interrogating for mouse 16 at action 44 as described and comparing that status with the status for mouse 16 stored in RAM 9. If the installed status is the same, the sequence moves to monitor the next feature. If the installed status is different, this is determined to be a reduction or addition in action 46 with respect to the prior installed status for mouse 16 stored in RAM 9. A reduced status results in an emphasize signal 48 being stored in RAM 9. An addition determination results in that new status being stored in RAM 9 in place of the information for the previous status for mouse 16.

The serial port is then monitored by interrogating for the serial port at action 50 as described and comparing that status with the status for the serial port stored in RAM 9. If the installed status is the same, the sequence moves to monitor the next feature. If the installed status is different, this is determined to be a reduction or addition in action 52 with respect to the prior installed status for the serial port stored in RAM 9. A reduced status results in an emphasize signal 54 being stored in RAM 9. An addition determination results in that new status being stored in RAM 9 in place of the information for the previous status for the serial port.

The modem is then monitored by interrogating for the modem at action 56 as described and comparing that status with the status for the modem stored in RAM 9. If the installed status is the same, the sequence moves to monitor the next feature. If the installed status is different, this is determined to be a reduction or addition in action 58 with respect to the prior installed status for the modem stored in RAM 9. A reduced status results in an emphasize signal 60 being stored in RAM 9. An addition determination results in that new status being stored in RAM 9 in place of the information for the previous status for the modem.

The parallel port is then monitored (Fig. 3b) by interrogating for the parallel port at action 62 as described and comparing that status with the status for the parallel port stored in RAM 9. If the installed status is the same, the sequence moves to monitor the next feature. If the installed status is different, this is determined to be a reduction or addition in action 64 with respect to the prior installed status for the parallel port in RAM 9. A reduced status results in an emphasize signal 66 being stored in RAM 9. An addition determination results in that new status being stored in RAM 9 in place of the information for the previous status for the parallel port.

Memory is then monitored by interrogating for the memory at action 68 as described and comparing that status with the status for the memory stored in RAM 9. If the installed status is the same, the sequence moves to monitor the next feature. If the installed status is different, this is determined to be a reduction or addition in action 70 with respect to the prior installed status for the parallel port in RAM 9. A reduced status results in an emphasize signal 72 being stored in RAM 9. An addition determination results in that new status being stored in RAM 9 in place of the information for the previous status for memory.

Drive A is then monitored by interrogating for Drive A at action 74 as described and comparing that status with the status for Drive A stored in RAM 9. If the installed status is the same, the sequence moves to monitor the next feature. If the installed status is different, this is determined to be a reduction or addition in action 76 with respect to the prior installed status for Drive A in RAM 9. A reduced status results in an emphasize signal 78 being stored in RAM 9. An addition determination results in that new status being stored in RAM 9 in place of the information for the previous status for Drive A.

Drive B is then monitored by interrogating for Drive B at action 80 as described and comparing that status with the status for Drive B stored in RAM 9. If the installed status is the same, the sequence moves to monitor the next feature. If the installed status is different, this is determined to be a reduction or addition in action 82 with respect to the prior installed status for Drive B in RAM 9. A reduced status results in an emphasize signal 84 being stored in RAM 9. An addition determination results in that new status being stored in RAM 9 in place of the information for the previous status for Drive B.

Fixed disk is then monitored by interrogating for fixed disk at action 86 as described and comparing that status with the status for fixed disk stored in RAM 9. If the installed status is the same, the sequence moves to monitor the next feature. If the installed status is different, this is determined to be a reduction or addition in action 88 with respect to the prior installed status for fixed disk in RAM 9. A reduced status results in an emphasize signal 90 being stored in RAM 9. An addition determination results in that new status being stored in RAM 9 in place of the information for the previous status for fixed disk.

The game card is then monitored by interrogating for the game card at action 92 as described and comparing that status with the status for the game card stored in RAM 9. If the installed status is the same, the sequence moves to the remainder of POST 30. If the installed status is different, this is determined to be a reduction or addition in action 94 with respect to the prior installed status for fixed disk in RAM 9. A reduced status results in an emphasize signal 96 being stored in RAM 9. An addition determination results in that new status being stored in RAM 9 in place of the information for the previous status for the game card. The sequence then returns at action 94 to the remainder of POST 30.

Each of the yes determinations stored in RAM 9 also is employed to produce an error signal displayed at the end of POST 30 on display 1. That is a standard procedure to show such errors at turn on, and the messages displayed are the number code unique to each feature which is also standard in such error messages. The operator must then activate a preselected key on keyboard 15 to terminate the error signal and continue with normal start-up. Normal start-up is terminated with a selection screen on display 1. Selection of disk operation system while that screen is displayed permits an optional input which calls up the listing of features on display 1 shown in Fig. 2. On that message on display 1, the emphasize signals stored in RAM 9 results a black arrowhead pointing to each feature found to be reduced, shown in Fig. 2 by the black arrowhead pointed to memory size.

The message display of Fig. 2 is terminated by entering either Enter from keyboard 15 or by mouse 16 or Esc from the corresponding key of keyboard 15 or by mouse 16.

Entry of Esc does not change RAM 9 with respect to storing the status of options. Entry of Enter does change RAM 9 to store the status of options as reduced. This sequence of operation is shown in Fig. 4. Configuration routine 100 has been activated, producing the listing of Fig. 2. The computer operator must activate either Enter or Esc to leave this routine. This is monitored in action 102, with Esc simply directly ending the routine at exit 104. Enter revises RAM 9 with the status information of the reduced options followed by ending of the configuration routine. Thus, when the operator selects Enter, the next POST monitoring of features as described will consider a status found reduced the previous time as not reduced if it remains the same. For example, with respect to Fig. 2, a finding of 512 KB of memory in the next POST after Enter is selected will not be emphasized.

All of the continuing information to produce status messages are in ROM 7 and varying information is in RAM 9. Generating the messages displaying such information is therefore entirely conventional and will not be described in detail.

It will be apparent that this monitoring involves no operator action after an option is added until an apparent failure of an option is signaled. The option apparently failing is emphasized in the message. Various different signals and messages clearly would be effective. Those and other variations are within the spirit and scope of this invention for which patent coverage is sought.

**Claims**

1.  A computer system comprising a data processor having a memory, means to attach additional devices to said computer system, means controlled by said data processor when said computer system is initiated to sense said additional devices attached and to record which of said additional devices are attached in said memory, means controlled by said data processor at a subsequent initiation of said computer system to sense said additional devices attached and to compare that result with the said additional devices recorded in said memory, and means controlled by said data processor to produce a signal to a human operator when said comparison indicates reduction in said additional devices attached.

2. The computer system as in claim 1 in which said sensing, said comparing, and said producing a signal are done under the control of a power-on self test.

3. The computer system as in claim 1 or 2 also comprising a display, and in which said signal to a human operator is a visual emphasis on the listing of said additional device on a message of said display listing several devices potentially in said computer system.

4. A computer system comprising a data processor including a memory effective to store information after loss of external power, means to attach additional devices to said computer system, means controlled by said data processor when said computer system is initiated to sense said additional devices attached and to record which of said additional devices are attached in said memory as information in said memory, means controlled by said data processor at a subsequent initiation of said computer system to sense said additional devices attached and to compare that result with said information defining additional devices attached in said memory, and means controlled by said data processor to produce a signal to a human operator when said comparison indicates reduction in said additional devices attached.

5. The computer system as in claim 4 in which said sensing, said comparing, and said producing a signal are done under the control of a power-on self test.

6. The computer system as in claim 5 also comprising a display, and in which said signal to a human operator is a visual emphasis on the listing of said additional device on a message of said display listing several devices potentially in said computer system.

FIG. 1

FIG. 2

```
┌─────────────────────────────────────────────┐
│           VIEW/CHANGE HDWE CONFIG             │
│   ENTER = SAVE     ESC = CANCEL     F1 = HELP │
│                                               │
│                                               │
│   MEMORY SIZE            ► 512 KB (0.5MB)      │
│   FIXED DISK              INSTALLED            │
│   DISKETTE DRIVE A        1.44 MB              │
│   DISKETTE DRIVE B        NOT INSTALLED        │
│   MOUSE                   INSTALLED            │
│   SERIAL PORT CONFIG      INTERNAL MODEM       │
│   PARALLEL PORT           PARALLEL-1           │
│                                               │
└─────────────────────────────────────────────┘
```

1

FIG. 3a

EP 0 439 988 A2

FIG. 3b

10

FIG. 4